# EUROPEAN PATENT APPLICATION

(11) **EP 4 591 804 A1**
(43) Date of publication of application: **30.07.2025**
(21) Application number: 23867963.3
(22) Date of filing: 25.08.2023
(51) Int. Cl.: A61B 10/00, G06N 3/045, G06N 20/00, G06V 10/80, G06V 10/82

(54) **IDENTIFICATION DEVICE, IDENTIFICATION METHOD, AND PROGRAM**

(30) Priority: 22.09.2022 JP 2022151008
(71) Applicant: CASIO COMPUTER CO., LTD., Tokyo 151-8543 (JP)
(72) Inventor: SAITO, Atsushi, Hamura-shi, Tokyo 205-8555 (JP)
(74) Representative: Grünecker Patent- und Rechtsanwälte PartG mbB
(86) International application number: PCT/JP2023/030655
(87) International publication number: WO 2024/062839

(57) **Abstract**

A diagnosis support apparatus that is a diagnosis apparatus comprises a multi-modal classifier (multi-modal classifier (3 0x)) that corresponds to a plurality of mutually different modalities, and a plurality of single-modal classifiers (single-modal classifier (30a), single-modal classifier (30b)) that correspond to each of the plurality of mutually different modalities. The multi-modal classifier is configured to classify, based on a plurality of classification scores calculated by the plurality of single-modal classifiers and a plurality of feature quantities that are obtained in a process of calculating the plurality of classification scores and are respectively calculated by the different single-modal classifiers, a target.

## Description

### Technical Field

The present disclosure relates to a classification apparatus, a classification method, and a program.

### Background Art

In the related art, multi-modal classifiers are known that classify a target by integrating classification results based on data of different modalities. An example of such a multi-modal classifier is described in Patent Literature 1.

### Citation List

### Patent Literature

Patent Literature 1: Unexamined Japanese Patent Application Publication No. 2021-076913

### Summary of Invention

### Technical Problem

Generally, multi-modal classifiers are expected to demonstrate classification accuracy greater than or equal to that of single-modal classifiers, but there is room for improvement in classification accuracy, and there is also a demand for further accuracy improvements.

In light of the situation described above, an objective of one aspect of the present disclosure is to accurately perform the classification of a target using data of a plurality of different modalities.

### Solution to Problem

A classification apparatus according to one aspect of the present disclosure comprises a multi-modal classifier corresponding to a plurality of mutually different modalities; and a plurality of single-modal classifiers corresponding to each of the plurality of mutually different modalities. The multi-modal classifier is configured to classify, based on a plurality of classification scores calculated by the plurality of single-modal classifiers and a plurality of feature quantities that are obtained in a process of calculating the plurality of classification scores and are respectively calculated by the different single-modal classifiers, a target.

A classification method according to one aspect of the present disclosure comprises: inputting each of a plurality of input data having mutually different modalities into a corresponding single-modal classifier to acquire a plurality of classification scores; acquiring a plurality of feature quantities that are obtained in a process of calculating the plurality of classification scores and are respectively calculated by the different single-modal classifiers; and classifying, based on the plurality of classification scores and the plurality of feature quantities, a target by a multi-modal classifier corresponding to a plurality of modalities corresponding to the plurality of input data.

A program according to one aspect of the present disclosure causes a computer to execute processing for: inputting each of a plurality of input data having mutually different modalities into a corresponding single-modal classifier to acquire a plurality of classification scores; acquiring a plurality of feature quantities that are obtained in a process of calculating the plurality of classification scores and are respectively calculated by the different single-modal classifiers; and classifying, based on the plurality of classification scores and the plurality of feature quantities, a target by a multi-modal classifier corresponding to a plurality of modalities corresponding to the plurality of input data.

### Advantageous Effects of Invention

According to the aspects described above, it is possible to accurately perform the classification of a target using data of a plurality of different modalities.

### Brief Description of Drawings

FIG. 1 is a drawing illustrating an example of the functional configuration of a diagnosis support apparatus according to an embodiment;
FIG. 2 is a drawing illustrating an example of the functional configuration of a classifier of the diagnosis support apparatus illustrated in FIG. 1;
FIG. 3 is another drawing illustrating an example of the details of the functional configuration of the classifier of the diagnosis support apparatus illustrated in FIG. 1;
FIG. 4 is a drawing illustrating an example of a network configuration of the classifier of the diagnosis support apparatus illustrated in FIG. 1;
FIG. 5 is a drawing for explaining a score calculation method of a multi-modal classifier;
FIG. 6 is a drawing for explaining a parameter shared range;
FIG. 7 is a flowchart illustrating an example of learning processing for generating the classifier illustrated in FIG. 1;
FIG. 8 is a flowchart illustrating an example of inference processing performed by the diagnosis support apparatus illustrated in FIG. 1; and
FIG. 9 is a drawing illustrating a modified example of the functional configuration of the classifier illustrated in FIG. 3.

### Description of Embodiments

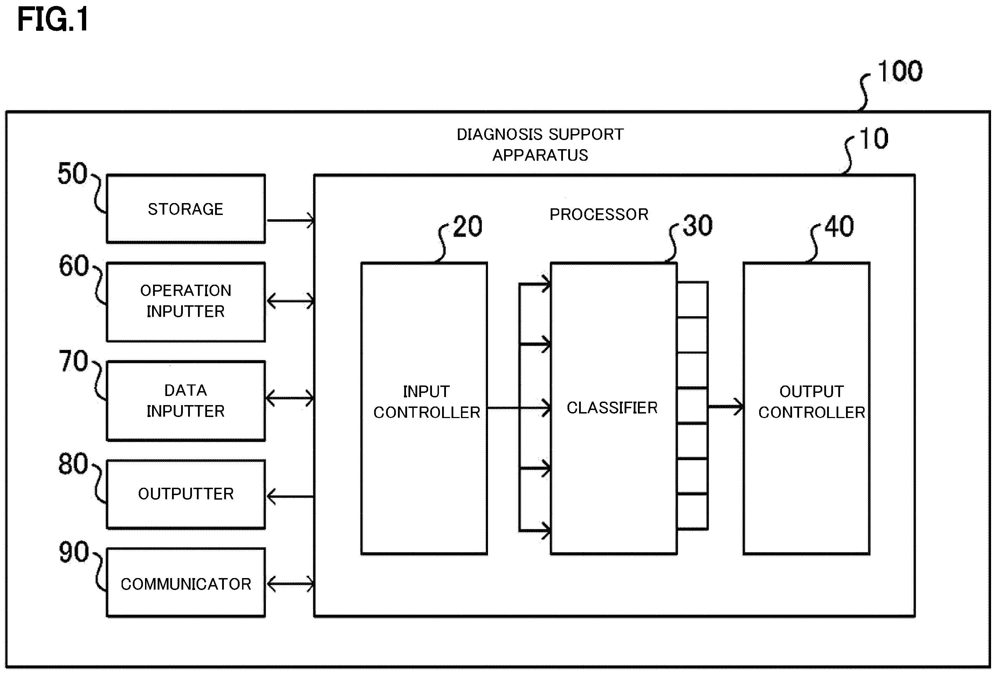

FIG. 1 is a drawing illustrating an example of the functional configuration of a diagnosis support apparatus according to an embodiment. The diagnosis support apparatus 100 illustrated in FIG. 1 is a diagnosis support apparatus used in the diagnosing of the presence/absence of a skin disease and/or the type of a disease. In response to an input of skin image data, the diagnosis support apparatus 100 outputs classification results of the disease to be diagnosed. Accordingly, the diagnosis support apparatus 100 is an example of a classification apparatus and, for example, is configured from a general-use or specialized computer. Note that, the diagnosis support apparatus 100 may be configured as an apparatus that includes a classification apparatus that outputs classification results.

Although there is no limitation in particular for the skin image data input for diagnosis, examples thereof include data of dermoscopy images acquired by an imaging apparatus provided with a dermoscope. Note that, a dermoscope is a magnifying glass that can non-invasively observe suspected skin lesions by magnifying them while reducing light reflected from the skin surface. As such, dermoscopy images obtained by a dermoscope are suited for the classification of skin diseases. Note that, the skin image to be inputted is not limited to a dermoscopy image.

Imaging methods using a gel or a polarization filter are known as specific methods for reducing the effects of light reflected from the skin surface in dermoscopes. Moreover, with dermoscopes, imaging methods using ultraviolet (UV) light are also known. Imaging using UV light can yield dermoscopy images that reflect the UV absorbing properties of melanin and the fluorescent reaction to UV light, and is suited for the classification of skin diseases, similar to the images in which the effects of light reflected from the skin surface are reduced. Note that, the imaging method using gel can be used in combination with another imaging method that uses a polarization filter or UV light.

Thus, with the imaging apparatus provided with the dermoscope, it is possible to obtain, by these imaging methods and/or a combination thereof, skin image data of a plurality of mutually different modalities. The diagnosis support apparatus 100 is adapted to the input of skin image data of this plurality of mutually different modalities. That is, the diagnosis support apparatus 100 can obtain classification results from each piece of skin image data of the plurality of mutually different modalities. Moreover, by using the skin image data of two or more mutually different modalities, the diagnosis support apparatus 100 can obtain a single classification result whereby classification accuracy higher than when using each piece of the skin image data independently can be expected. That is, the diagnosis support apparatus 100 is a classification apparatus that operates with either the input of a single-modality or the input of a plurality of modalities.

In the following, the configuration of the diagnosis support apparatus 100 is described in detail. As illustrated in FIG. 1, the diagnosis support apparatus 100 comprises a processor 10, a storage 50, an operation inputter 60, a data inputter 70, an outputter 80, and a communicator 90.

The processor 10 executes various types of calculation processing to control the operations of the diagnosis support apparatus 100. In one example, the processor 10 includes a processor such as a central processing unit (CPU), a graphics processing unit (GPU), or the like. The processor 10 may also include an optional electronic circuit that operates as a programmable device such as a field-programmable gate array (FPGA).

The storage 50 stores various types of programs executed by the processor 10, various types of data used when executing the programs, and the like. In one example, the storage 50 includes semiconductor memory such as random access memory (RAM), read-only memory (ROM), and the like. The storage 50 may further include an external storage apparatus such as a solid state drive (SSD), a hard disk drive (HDD), or the like.

The programs and data stored in the storage 50 include a machine learning model, input data used in inference using the machine learning model, and the like. The input data input to the machine learning model is, specifically, the skin image data of the single or plurality of modalities described above. The input data is input via the data inputter 70 or the communicator 90, and is stored in the storage 50. The data stored in the storage 50 is input into the machine learning model. Specifically, the machine learning model is a deep learning model (hereinafter referred to as "CNN model") using a convolutional neural network (CNN) that outputs classification results in response to the inputting of the image data (skin image data).

The storage 50 may further store image data for learning used in the learning of the machine learning model and, in such a case, a label indicating the type of disease (or that there is no disease) is attached to the image data for learning. Note that, the learning of the machine learning model using the image data for learning may be performed in an apparatus other than the diagnosis support apparatus 100, and the machine learning model that has been learned by the apparatus other than the diagnosis support apparatus 100 may be stored in the storage 50 of the diagnosis support apparatus 100.

In the diagnosis support apparatus 100, the processor of the processor 10 executes the programs stored in the storage 50 to cause the processor 10 to operate as, as illustrated in FIG. 1, an input controller 20, a classifier 30, and an output controller 40, and output the classification results according to the input data. That is, the diagnosis support apparatus 100 operates as a classification apparatus using the CNN model.

The operation inputter 60 receives operation inputs by a user to the diagnosis support apparatus 100. The operation inputter 60 may, for example, include a keyboard, a mouse, a touch panel, or the like, or may be an interface for connecting to these input devices.

The data inputter 70 acquires the input data. In one example, the data inputter 70 is connected to the imaging apparatus provided with the dermoscope, and acquires image data of dermoscopy images (skin images) acquired by the imaging apparatus. The data acquired by the data inputter 70 is stored in the storage 50.

The outputter 80 outputs the classification results obtained by the processor 10. The outputter 80 may, for example, include a display apparatus such as a liquid crystal display, an organic EL display, or the like, or may be an interface that is connected to a display apparatus. The outputter 80 displays the classification results on the display apparatus to provide the classification results to the user of the diagnosis support apparatus 100.

The communicator 90 exchanges data with an apparatus other than the diagnosis support apparatus 100. The communicator 90 may receive the image data of the skin image from an apparatus different than the diagnosis support apparatus 100. The image data acquired by the communicator 90 is stored in the storage 50. Moreover, the communicator 90 may transmit the classification results to an apparatus different than the diagnosis support apparatus 100. For example, the diagnosis support apparatus 100 may transmit the classification results to a computer of the user who requested, to the diagnosis support apparatus 100, the diagnosis processing.

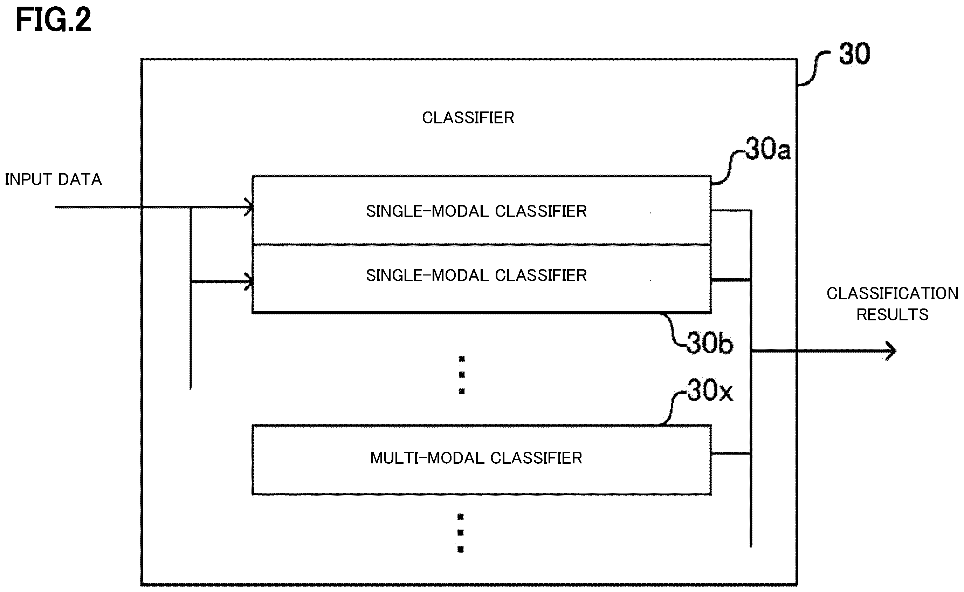

FIG. 2 is a drawing illustrating an example of the functional configuration of the classifier of the diagnosis support apparatus illustrated in FIG. 1. The processor 10 is described in detail while referencing FIGS. 1 and 2. As described above, the processor 10 comprises the input controller 20, the classifier 30, and the output controller 40.

As illustrated in FIG. 2, the classifier 30 includes a plurality of single-modal classifiers (single-modal classifier 30a, single-modal classifier 30b, ...) and one or more multi-modal classifiers (multi-modal classifier 30x, ...).

Each of the single-modal classifiers is a classifier corresponding to a single modality, and is a CNN model that is trained specifically on input data of that modality. The plurality of single-modal classifiers included in the classifier 30 respectively corresponds to each of the plurality of mutually different modalities.

The image data of the plurality of mutually different modalities to which the plurality of single-modal classifiers included in the classifier 30 corresponds is, for example, skin image data imaged by a plurality of mutually different imaging methods using the dermoscope. The plurality of imaging methods may be distinguished by a combination of various elements, namely the use/non-use of a gel, the use/non-use of a polarization filter, the use/non-use of UV light, and contact or non-contact imaging. Accordingly, each of the single-modal classifiers may be a classifier that corresponds to a specific imaging method using the dermoscope.

More specifically, the classifier 30 may include, for example, six single-modal classifiers that correspond to the modalities of the image data imaged by a total of six imaging methods corresponding to a combination of the two patterns of the use/non-use of a gel and the three patterns of the use/non-use of the polarization filter or UV light (polarization filter use, UV light use, non-use of both polarization filter and UV light). Moreover, in the case of gel non-use, the imaging methods may be further distinguished into a contact method in which imaging is performed while contacting the skin and a non-contact method in which imaging is performed while being separated from the skin and, in such a case, the classifier 30 may include nine single-modal classifiers corresponding to the modalities of the image data imaged by a total of nine imaging methods. Note that, it is desirable that the classifier 30 is adapted to two or more of the modalities of the image data imaged by the nine imaging methods described above.

The multi-modal classifier is a classifier that corresponds to a plurality of mutually different modalities, and is a CNN model that is trained specifically on a specific combination of input data of the plurality of mutually different modalities. The multi-modal classifier included in the classifier 30 corresponds to the plurality of mutually different modalities. Although it is sufficient that the classifier 30 includes at least one multi-modal classifier, the classifier 30 may include multi-modal classifiers corresponding to any combination of two or more of the plurality of mutually different modalities. That is, when the classifier 30 includes n single-modal classifiers, the classifier 30 may include, at maximum, m multi-modal classifiers. Here, m is ΣₙCᵣ (where Σ is the sum of ₙCᵣ when r is from 2 to n).

As described in detail later, the multi-modal classifier included in the classifier 30 is configured to classify a target according to a plurality of classification scores calculated by the plurality of single-modal classifiers included in the classifier 30, and a plurality of feature quantities that are obtained in the process of calculating this plurality of classification scores and are respectively calculated by the different single-modal classifiers.

The input controller 20 inputs the input data into the single-modal classifier corresponding to the modality of that input data. In one example, the input controller 20 reads, from the storage 50, the skin image data selected according to an image selection operation by the user performed on the operation inputter 60, and inputs the read skin image data into the classifier 30 as the input data.

At this time, the input controller 20 may input, into the single-modal classifier corresponding to the modality of the input data, the input data according to information identifying the modality of the input data acquired from meta data attached to that input data. That is, the input controller 20 may determine the modality of the image selected by the user and input that image into the appropriate single-modal classifier of the classifier 30. Moreover, the input controller 20 may input the input data into the single-modal classifier corresponding to a modality specified by the user. That is, the user themself may select the modality of the image selected by the user, and the input controller 20 may input the input data into the single-modal classifier corresponding to the modality selected by the user.

The output controller 40 outputs the classification results generated by the classifier 30. In one example, the output controller 40 outputs, in response to the image selection operation by the user performed on the operation inputter 60, the classification results generated by the classifier 30 to the outputter 80. At this time, if the input data is data having a single modality, the output controller 40 acquires the classification results from the single-modal classifier corresponding to that single modality and, if the input data is a plurality of data having a plurality of modalities, the output controller 40 acquires the classification results from the multi-modal classifier corresponding to that plurality of modalities. Note that, cases in which the input data is data having a single modality include, for example, cases in which the user has selected only one image, cases in which the user has selected a plurality of images but the modalities of these images are the same, and the like.

The diagnosis support apparatus 100 including the processor 10 configured as described above can, with the classifier 30 including the plurality of single-modal classifiers and one or more multi-modal classifiers, be adapted to input data of various modalities and combinations of input data of various modalities.

In particular, with the diagnosis support apparatus 100, the multi-modal classifier classifies the target using not only the plurality of classification scores (corresponding to the plurality of classification results) obtained by the plurality of single-modal classifiers, but also the plurality of feature quantities (corresponding to output information that is intermediate compared to the classification scores) obtained by the plurality of single-modal classifiers. This plurality of feature quantities are feature quantities obtained by the mutually different single-modal classifiers. By using this plurality of feature quantities, it is possible to reflect, in the classification results, the interactions caused by the plurality of feature quantities. As such, the diagnosis support apparatus 100 can obtain, with the multi-modal classifiers, classification results that are more accurate than the classification results obtained by the relatively simple ensemble (for example, average, majority, linear combination, or the like) of the plurality of single-modal classifiers.

Moreover, the diagnosis support apparatus 100 can, with the input controller 20 inputting the input data into the single-modal classifier corresponding to the modality of that input data, cause the classifier 30 to appropriately function in accordance with the input data. In particular, with a configuration in which the input controller 20 automatically selects, according to meta data, the classifier into which the input data is to be input, the diagnosis support apparatus 100 can perform classification processing by the appropriate classifier without the user bothering about the modality of the image data.

Moreover, the diagnosis support apparatus 100 can, with the output controller 40 acquiring the classification results from the classifier corresponding to the modality of the input data, provide, to the user, results (classification results) of the classification processing performed by the appropriate classifier. Moreover, when input data of a plurality of modalities is input, the classification results of the multi-modal classifiers are preferentially acquired compared to the classification results of the single-modal classifiers and, as such, it is possible to obtain highly accurate classification results.

Moreover, the diagnosis support apparatus 100 is adapted to the plurality of modalities of the plurality of image data imaged by the plurality of different imaging methods using the dermoscope. With this, it is possible to adapt to the various dermoscopy images conventionally used for diagnosing. Moreover, it is possible to perform highly accurate diagnosis support by combining various conventionally used dermoscopy images. In particular, for example, a multi-modal classifier corresponding to the plurality of modalities of the plurality of image data imaged by the imaging methods whose characteristics significantly differ (for example, imaging method using a polarization filter, imaging method using UV light, and the like) may particularly effectively exhibit interaction effects and contribute to highly accurate classification. Therefore, according to the diagnosis support apparatus 100, it is possible to perform diagnosis support in which dermoscopy images are more effectively utilized than in conventional diagnosis support.

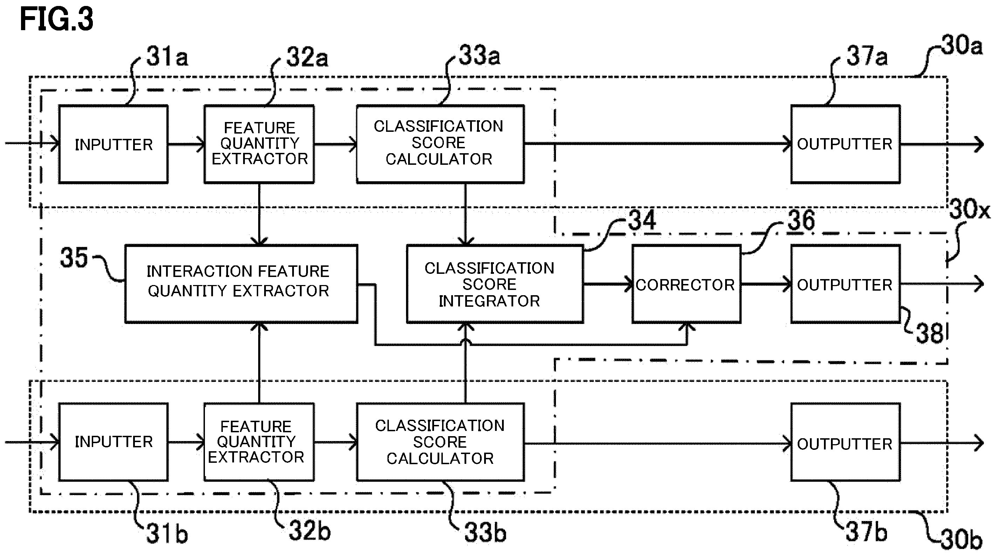

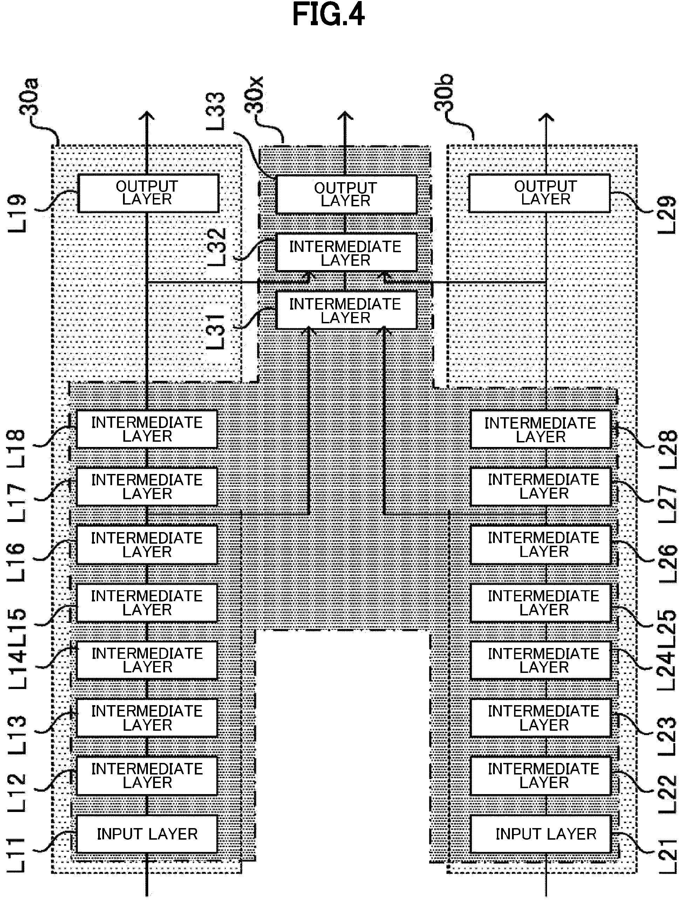

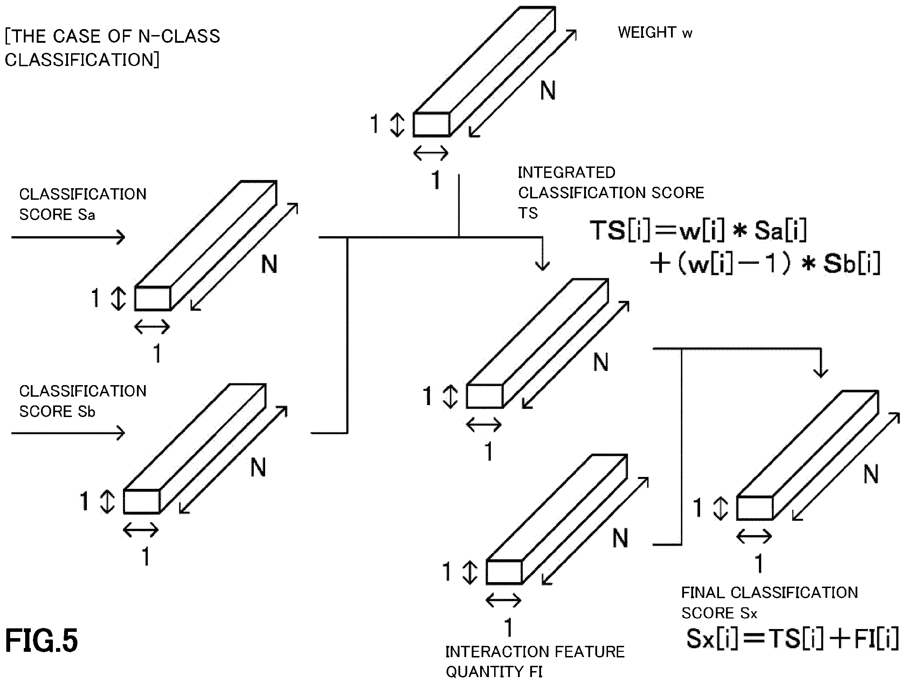

FIG. 3 is a drawing illustrating an example of the details of the functional configuration of the classifier of the diagnosis support apparatus illustrated in FIG. 1. FIG. 4 is a drawing illustrating an example of the network configuration of the classifier of the diagnosis support apparatus illustrated to FIG. 1. FIG. 5 is a drawing for explaining a score calculation method of the multi-modal classifier. The configuration of the processor 10 is described in more detail while referencing FIGS. 3 to 5.

In the following, to facilitate explanation, an example is described in which the classifier 30 includes a single-modal classifier 30a and a single-modal classifier 30b that correspond to respective different imaging methods using the dermoscope, and a multi-modal classifier 30x that corresponds to a combination of the imaging method to which the single-modal classifier 30a corresponds and the imaging method to which the single-modal classifier 30b corresponds. Note that, the imaging method to which the single-modal classifier 30a corresponds is, for example, an imaging method in which a gel is used and polarized light is used, and the imaging method to which the single-modal classifier 30b corresponds is, for example, an imaging method in which a gel is used and UV light is used.

As illustrated in FIG. 3, the single-modal classifier 30a and the single-modal classifier 30b respectively include inputters 31a, 31b, feature quantity extractors 32a, 32b, classification score calculators 33a, 33b, and outputters 37a, 37b. Moreover, the single-modal classifier 30a and the single-modal classifier 30b are configured as CNN models and, as illustrated in FIG. 4, respectively include neural networks including input layers L11, L21, two or more intermediate layers L12 to L18 or two or more intermediate layers L22 to L28, and an output layer L19 or an output layer L29.

The inputters 31a, 31b respectively correspond to the input layer L11 and the input layer L21. The skin image data of the corresponding modality is input into the inputters 31a, 31b by the input controller 20.

The feature quantity extractors 32a, 32b and the classification score calculators 33a, 33b respectively correspond to the two or more intermediate layers L12 to L18 and the two or more intermediate layers L22 to L28. The feature quantity extractors 32a, 32b extract feature quantities from the skin image data by repeating convolution processing (convolution layer), pooling processing (pooling layer), full connection processing (affine layer), and the like.

Note that, regarding the feature quantities extracted by the feature quantity extractors 32, low level feature quantities obtained from local regions of the image are extracted from the layers located in the relatively former portion of the network. In contrast, high level feature quantities obtained from broader regions are extracted from the layers located in the latter portion of the network. In the process of the diagnosis using a plurality of images, it is thought that a physician unconsciously carries out work of firstly inspecting each image one at a time to obtain a high level representation that summarizes the respective patterns, and then integrating them according to their own experience to determine a diagnosis result. As such, it is thought that reflecting, in the classification results, the interactions caused by the latter feature quantities on the former feature quantities is closer to the thought process of the physician when diagnosing using a plurality of images.

The classification score calculators 33a, 33b correspond to a final layer, or a plurality of layers including the final layer, among the two or more intermediate layers. The classification score calculators 33a, 33b respectively calculate classification scores according to the feature quantities extracted by the feature quantity extractors 32a, 32b. The classification score is output information from the final layer of the intermediate layers. The classification score is a one-dimensional array consisting of N elements wherein N is a number of classes that the single-modal classifier classifies, that is, is an N-dimensional vector, and each element is a classification value (scalar) for the corresponding class. Moreover, each class corresponds to a disease for which the diagnosis support apparatus 100 performs diagnosis support. The classification value is a value indicating the likelihood of the corresponding class, that is, is a value indicating the likelihood of the corresponding disease. FIG. 5 illustrates an example in which a classification score Sa, calculated by the single-modal classifier 30a, and a classification score Sb, calculated by the single-modal classifier 30b, are output as N-dimensional vectors.

The outputters 37a, 37b respectively correspond to the output layer L19 and the output layer L29. The outputters 37a, 37b input, into an activation function, the classification scores obtained by the classification score calculators 33a, 33b to respectively calculate classification results. In one example, the activation function is a Softmax function, and calculates classification results indicating probabilities.

As illustrated in FIG. 3, the multi-modal classifier 30x includes the plurality of inputters 31a, 31b, the plurality of feature quantity extractors 32a, 32b, the plurality of classification score calculators 33a, 33b, a classification score integrator 34, an interaction feature quantity extractor 35, a corrector 36, and an outputter 38. Moreover, the multi-modal classifier 30x is also configured as a CNN model and, as illustrated in FIG. 4, includes a neural network including input layers L11, L21, two or more intermediate layers L12 to L18, two or more intermediate layers L22 to L28, intermediate layers L31 and L32, and an output layer L33.

Each of the inputters 31a, 31b are as described for the single-modal classifiers. As illustrated in FIG. 4, the input layers L11, L21 respectively corresponding to the inputters 31a, 31b are shared by each of the plurality of single-modal classifiers and the multi-modal classifier.

The feature quantity extractors 32a, 32b, the plurality of classification score calculators 33a, 33b, the classification score integrator 34, the interaction feature quantity extractor 35, and the corrector 36 correspond to the two or more intermediate layers L12 to L18, the two or more intermediate layers L22 to L28, and the intermediate layers L31 and L32.

Each of the feature quantity extractors 32a, 32b and each of the classification score calculators 33a, 33b are as described for the single-modal classifiers. As illustrated in FIG. 4, the intermediate layers L12 to L18 and the intermediate layers L22 to L28 corresponding to the feature quantity extractors 32a, 32b and the classification score calculators 33a, 33b are shared by each of the plurality of single-modal classifiers and the multi-modal classifier.

The classification score integrator 34, the interaction feature quantity extractor 35, and the corrector 36 correspond to the intermediate layers L31 and L32. The interaction feature quantity extractor 35 corresponds to the intermediate layer L31, and the classification score integrator 34 and the corrector 36 correspond to the intermediate layer L32. As illustrated in FIG. 4, these intermediate layers are not shared with the single-modal classifiers. That is, the multi-modal classifier includes, as the intermediate layers, shared intermediate layers shared with each of the plurality of single-modal classifiers (the intermediate layers L12 to L18 and the intermediate layers L22 to L28), and unique intermediate layers unique to the multi-modal classifier (the intermediate layers L31 and L32).

As illustrated in FIG. 3, the classification score integrator 34 calculates an integrated classification score according to the plurality of classification scores output from the plurality of classification score calculators 33. Specifically, the classification score integrator 34 calculates the integrated classification score by combining the plurality of classification scores. More specifically, as illustrated in FIG. 5, the classification score integrator 34 calculates the integrated classification score by weighted addition of the plurality of classification scores. That is, the integrated classification score is calculated as the linear combination of the plurality of classification scores calculated by the plurality of single-modal classifiers (the single-modal classifier 30a and the single-modal classifier 30b). FIG. 5 illustrates an example in which a classification score Sa, calculated by the single-modal classifier 30a, and a classification score Sb, calculated by the single-modal classifier 30b, are linearly combined using a weight w to calculate an integrated classification score TS. Note that, in this example in which there are two single-modal classifiers, the weight w is, for example, an N-dimensional vector. As with the classification score Sa and the classification score Sb, the integrated classification score TS is an N-dimensional vector.

The interaction feature quantity extractor 35 extracts an interaction feature quantity according to the plurality of feature quantities obtained in the process of calculating the plurality of classification scores. The plurality of feature quantities input into the interaction feature quantity extractor 35 are feature quantities that are respectively extracted by the different single-modal classifiers (the single-modal classifier 30a and the single-modal classifier 30b), and are expressed as a matrix or a tensor. Note that, the feature quantities are also referred to as feature quantity maps. The interaction feature quantity extractor 35 linearly combines the plurality of feature quantities and, furthermore, performs convolution processing (convolution layer) and full connection processing (affine layer) to extract an interaction feature quantity FI consisting of an N-dimensional vector such as illustrated in FIG. 5.

Note that, interaction feature quantity is a feature quantity that, when considered as a dependent variable having the plurality of feature quantities as factors, the influence of each of the plurality of feature quantities on the interaction feature quantity, which is the dependent variable, varies depending on the levels of other feature quantities. That is, the interaction feature quantity cannot be expressed as a linear combination of the plurality of feature quantities, but is instead calculated as a nonlinear combination of the plurality of feature quantities.

The corrector 36 corrects the integrated classification score according to the plurality of feature quantities. Specifically, the corrector 36 corrects the integrated classification score using the interaction feature quantity extracted according to the plurality of feature quantities. More specifically, as illustrated in FIG. 5, the corrector 36 adds an interaction feature quantity FI as a bias to the integrated classification score TS to calculate a final classification score Sx that is consisted of, as with the classification score Sa and the classification score Sb, an N-dimensional vector.

The outputter 38 corresponds to an output layer (the output layer L33). The outputter 38 inputs, into an activation function, the final classification score obtained by the corrector 36 to calculate the classification results. In one example, the activation function is a Softmax function, and calculates classification results indicating probabilities. Note that, in FIGS. 3 and 4, an example is illustrated in which the output layer and the outputter are not shared among each of the plurality of single-modal classifiers and the multi-modal classifier, but they may be shared.

In the diagnosis support apparatus 100 including the processor 10 configured as described above, the multi-modal classifier corrects the integrated classification score according to the plurality of feature quantities. By correcting the integrated classification score, corresponding to a relatively simple ensemble of the plurality of single-modal classifiers, according to the plurality of feature quantities obtained from the plurality of single-modal classifiers, it is possible to reflect interactions not considered in the integrated classification score. In particular, by extracting the interaction feature quantities according to the plurality of feature quantities and correcting the integrated classification score using the extracted interaction feature quantities, the interactions can be more reliably reflected through correction. Accordingly, it is possible to obtain classification results of higher than conventional accuracy.

Moreover, in the diagnosis support apparatus 100, the plurality of single-modal classifiers and the multi-modal classifier are each configured by a CNN model, and the input layer and a portion of the intermediate layers (the shared intermediate layers) of the multi-modal classifier are shared with any of the plurality of single-modal classifiers. Accordingly, it is possible to configure the multi-modal classifier by expanding an existing single-modal classifier, and it is possible to significantly reduce the number of parameters needed in the entire diagnosis support apparatus 100 compared when configuring the multi-modal classifier as a completely new classifier independent from the single-modal classifiers. By reducing the number of parameters, in addition to being able to reduce the memory load by an amount corresponding to the reduction in the number of parameters, it is possible to reduce the time and effort needed to learn the machine learning model.

Moreover, the diagnosis support apparatus 100, in which the single-modal classifiers are expanded to configure the multi-modal classifier, can effectively use learning data and, on this point as well, is superior to a case in which the single-modal classifiers and the multi-modal classifier are configured independently.

The collected image data for learning typically includes more single image data of a specific modality than sets of image data of a plurality of modalities. For example, in a case in which an image imaged by the imaging method using a gel and an image imaged by the imaging method using UV light are collected, the number of provided sets of the image imaged by imaging method using a gel and the image imaged by the imaging method using UV light (that is, sets of images in which the same subject is imaged by different imaging methods) is often less than 1/10 the number of images each provided individually.

Accordingly, in a case in which the single-modal classifiers and the multi-modal classifier are independently configured, the learning data for the multi-modal classifier tends to be insufficient compared to the learning data for the single-modal classifiers, and a situation may arise in which the classification accuracy of the multi-modal classifier is inferior to the classification accuracy of the single-modal classifiers due to being insufficiently trained.

In contrast, with the diagnosis support apparatus 100, it is possible to construct the single-modal classifiers in advance by learning using a sufficient amount of learningdata. Alternatively, an existing single-modal classifier can be used as is. Thereafter, the multi-modal classifier may be learned. At this time, it is sufficient that the multi-modal classifier be learned with the parameters of the layers shared with the single-modal classifiers being fixed. With this, in the learning of the multi-modal classifier, only the parameters of the layers unique (unique intermediate layers) to the multi-modal classifier are optimized by learning and, as such, sufficient learning can be carried out with less learning data than used in the learning of the single-modal classifiers. That is, it is possible to avoid overlearning in which the multi-modal classifier is adapted only to a small amount of learning data.

Moreover, it is possible to correct, at a high level, the classification scores of the shared intermediate layers by providing the shared intermediate layers and the unique intermediate layers in the intermediate layers of the multi-modal classifier and inputting, into the unique intermediate layers, the output from the plurality of single-modal classifiers. In particular, by inputting, in addition to the classification scores output by the single-modal classifiers, the feature quantities obtained in the process of calculating the classification scores, it is possible to calculate a score in which the interaction effects are reflected, which cannot be obtained by linearly combining the classification scores. Furthermore, as illustrated in FIG. 3, by extracting the interaction feature quantities in advance from the plurality of feature quantities and causing the extracted interaction feature quantities to act as a bias term of the weighted addition of the classification scores, it is possible to correct the integrated classification score corresponding to the linear combination of the classification scores.

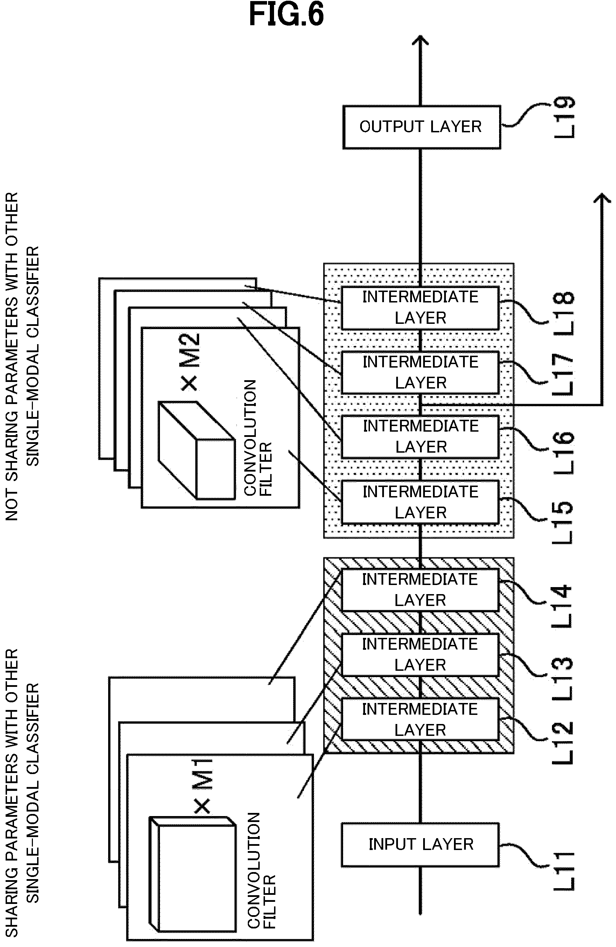

FIG. 6 is a drawing for explaining a parameter shared range. In the following, a configuration effective for further reducing the number of parameters is described while referencing FIG. 6. In the description given above, the sharing of parameters among the multi-modal classifier and the single-modal classifiers is described, but a configuration is possible in which parameters are shared among the plurality of single-modal classifiers.

That is, as illustrated in FIG. 6, a configuration is possible in which each of the plurality of single-modal classifiers includes a neural network including two or more intermediate layers (intermediate layers L12 to L18) and, in one or more (the intermediate layers L12 to L14) of the two or more intermediate layers, the parameters are shared with the intermediate layers of other single-modal classifier. With this, the one or more intermediate layers may use the same parameters as the intermediate layers of other single-modal classifier.

The diagnosis support apparatus 100 includes a plurality of single-modal classifiers that correspond to input data of different modalities, and these single-modal classifiers are all configured as CNN models that handle skin image data. Even among the single-modal classifiers that handle input data of different modalities, sharing of the parameters is possible provided that input data of completely different modalities such as image and sound is not handled but, rather, input data of somewhat similar modalities such as images is handled.

The shared parameters are weighting parameters exemplified by the convolution filter of the convolution layer, and the sharing of this parameter is also referred to as "weight sharing." Note that, the shared parameter is not limited to weight and other types of parameters may be shared.

It is desirable that the intermediate layers that share the parameters being located in the former portion of the network than being located in the latter portion. Local features (such as corners, edges, colors, and the like) that are common across modalities tend to be extracted from the intermediate layers of the former portion and, as such, it is possible to effectively share parameters, even between neural networks that handle image data of different modalities.

As illustrated in FIG. 6, by sharing the parameters among the plurality of single-modal classifiers, the number of parameters needed in the entire diagnosis support apparatus 100 can be further reduced. By reducing the number of parameters, it is possible to reduce the memory load by an amount corresponding to the reduction in the number of parameters. Moreover, by sharing the weighting parameter that is a parameter to be learned, it is possible to reduce the time and effort needed to learn the machine learning model.

When partially sharing the parameters among the plurality of single-modal classifiers, it is desirable that the parameters are shared in the layers of relatively former portion of the network since, typically, the lower the levels of features are, the more likely those features are shared among modalities. In FIG. 6, an example is illustrated in which each of the plurality of feature quantities used in the extraction of the interaction feature quantities is extracted from intermediate layers that do not share the parameters with the intermediate layers of other single-modal classifier, but the intermediate layers from which each of the plurality of feature quantities used in the extraction of the interaction feature quantities is extracted are not limited to intermediate layers that do not share the parameters with the intermediate layers of other single-modal classifiers, and each of the plurality of feature quantities used in the extraction of the interaction feature quantities may be extracted from the intermediate layers (intermediate layer L12 to intermediate layer L14) that share the parameters.

A configuration is possible in which the parameters of a learned single-modal classifier are copied to other single-modal classifier at a time of learning. That is, the parameters of the learned single-modal classifier may be used in transfer learning, thereby improving learning efficiency.

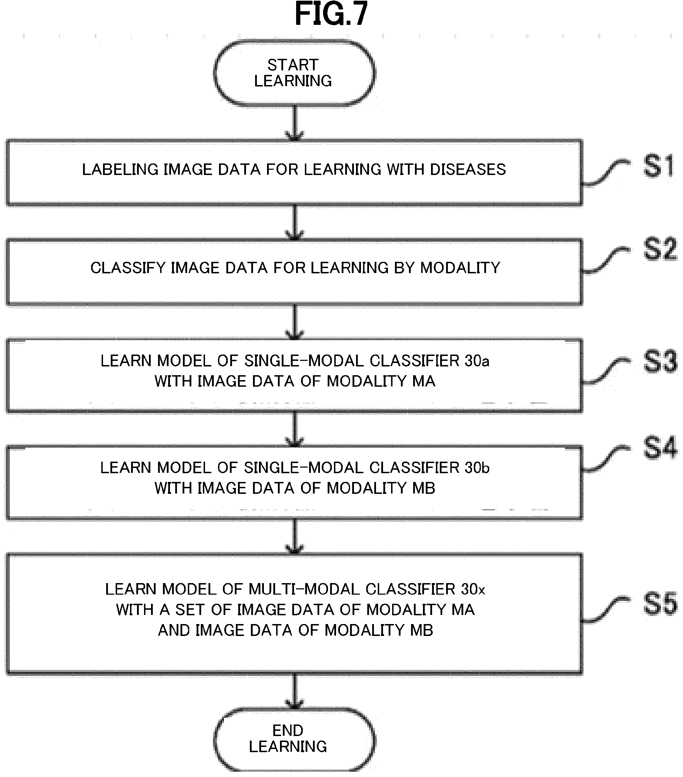

FIG. 7 is a flowchart illustrating an example of learning processing for generating the classifier illustrated in FIG. 1. In the following, the flow of the learning processing is described using an example in which the learning processing is performed by the diagnosis support apparatus 100.

In the learning processing, firstly, the image data for learning is labeled with diseases (step S1). In one example, the image data for learning is data of dermoscopy images imaged using the dermoscope, and is collected in advance. In these pieces of image data, diseases corresponding to lesions captured in the images are known. In step S1, the diagnosis support apparatus 100 assigns labels indicating those known diseases to the image data in accordance with the input by an operator. Note that, step S1 may be performed prior to the series of learning processing illustrated in FIG. 7.

Next, the diagnosis support apparatus 100 classifies, by modality, the image data for learning for which the labeling is completed (step S2). The labeled image data for learning has various modalities. In step S2, the diagnosis support apparatus 100 classifies the image data by modality. The classification may be performed according to meta data attached to the image data, or may be performed in accordance with the input by the operator as with step S1. Note that, here, an example is described in which the image data is classified into two types, namely image data of a modality MA, and image data of a modality MB.

Once preparation of the image data for learning is completed through the processing of steps S1 and S2, the diagnosis support apparatus 100 firstly learns the model (CNN model) of the single-modal classifier 30a with the image data of the modality MA (step S3). Here, the parameters are adjusted using the error backpropagation method. That is, the parameters are adjusted by inputting the image data for learning into the single-modal classifier 30a to calculate a loss function, and calculating the gradient of the loss function (cross entropy error) with respect to the parameters (weight, bias, and the like) using the chain rule.

Once the learning of the model of the single-modal classifier 30a is completed, the diagnosis support apparatus 100 learns the model (CNN model) of the single-modal classifier 30b with the image data of the modality MB (step S4). In step S4, the learning of a portion of the parameters may be omitted by using the parameters of the model learned in step S3. That is, it is sufficient that learning is performed, with the parameters of the model of the single-modal classifier 30b, which are shared with the model of the single-modal classifier 30a, being fixed, to adjust other parameters.

Note that, processing of steps S3 and S4 may be performed simultaneously. In such a case, the diagnosis support apparatus 100 may calculate a total of the loss function calculated by inputting the image data of the modality MA into the single-modal classifier 30a and the loss function calculated by inputting the image data of the modality MB into the single-modal classifier 30b. Both the parameters of the model of the single-modal classifier 30a and the parameters of the model of the single-modal classifier 30a (including the parameters shared between the models) may be optimized according to the gradient of the total loss function.

Once the learning of the of the single-modal classifiers is completed, the diagnosis support apparatus 100 learns the model (CNN model) of the multi-modal classifier 30x with a set of the image data of the modality MA and the image data of the modality MB (step S5). In step S5, by sharing the parameters of the models learned in steps S3 and S4, only the parameters unique to the multi-modal classifier are learned.

By performing the learning according to the procedures illustrated in FIG. 7, it is possible to efficiently construct classification apparatuses corresponding to each and both of the modality MA and the modality MB.

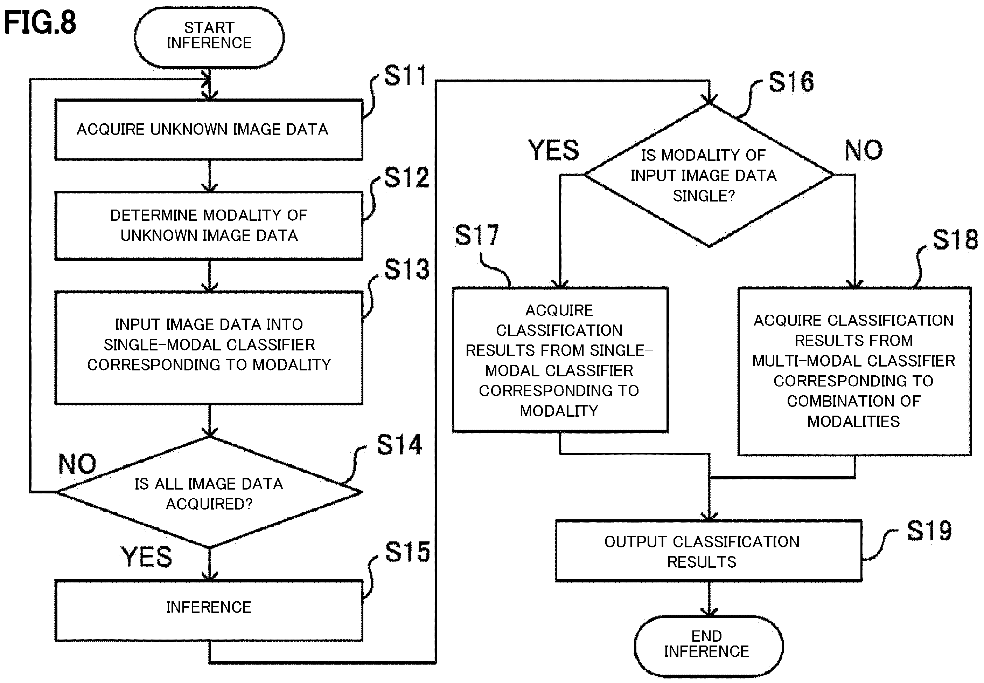

FIG. 8 is a flowchart illustrating an example of inference processing performed by the diagnosis support apparatus illustrated in FIG. 1. In the following, the flow of the inference processing performed by the diagnosis support apparatus 100 is described. Note that, the inference processing, performed by the diagnosis support apparatus 100 that is a classification apparatus, is classification processing.

In the inference processing, firstly, the diagnosis support apparatus 100 acquires unknown image data (step S11). In one example, the image data acquired in step S11 is a dermoscopy image acquired by the data inputter 70.

Next, the diagnosis support apparatus 100 determines the modality of the unknown image data acquired in step S11 (step S12). In one example, the processor 10 determines the modality according to the meta data of the image data. Then, the diagnosis support apparatus 100 inputs the image data acquired in step S11 into the single-modal classifier corresponding to the modality determined in step S12 (step S13).

The diagnosis support apparatus 100 determines whether all of the image data input in step S11 has been acquired (step S14). For example, if a set of image data including image data of a plurality of mutually different modalities is input in step S11, the diagnosis support apparatus 100 determines whether all of the plurality of pieces of image data comprising that set have been acquired. The diagnosis support apparatus 100 repeats the processing of step S11 to step S14 until all of the image data is acquired.

Once all of the image data is acquired, the diagnosis support apparatus 100 performs inference (step S14). Here, the classifier 30 described above executes the classification processing. Note that, if the set of image data including image data of a plurality of mutually different modalities is input in step S11, step S14 at least includes: a step of acquiring a plurality of classification scores from the corresponding single-modal classifiers into which each piece of the plurality of input data of the mutually different modalities is input; a step of acquiring a plurality of feature quantities that are obtained in the process of calculating the plurality of classification scores and are respectively calculated by the different single-modal classifiers; and a step of classifying, according to the plurality of classification scores and the plurality of feature values, the target by the multi-modal classifier corresponding to the plurality of modalities corresponding to the plurality of input data.

Once the inference is completed, the diagnosis support apparatus 100 acquires the classification results (steps S16 to S18). Specifically, the diagnosis support apparatus 100 firstly determines whether the modality of the input image data is a single modality (step S16). That is, the diagnosis support apparatus 100 determines whether the modality of the image data acquired in step S11 is a single modality.

If the modality is a single modality (step S16; YES), the diagnosis support apparatus 100 acquires the classification results from the single-modal classifier corresponding to that single modality (step S17). On the other hand, if the modality is not a single modality (step S16; NO), the diagnosis support apparatus 100 acquires the classification results from the multi-modal classifier corresponding to a combination of the modalities that is not a single modality (step S18).

Finally, the diagnosis support apparatus 100 outputs the classification results acquired in step S17 or step S18 (step S19). Here, the diagnosis support apparatus 100 displays the classification results on the display apparatus, for example.

By performing the inference in accordance with the procedures illustrated in FIG. 8, if the unknown image data has a single modality, classification results obtained by the single-modal classifier can be provided to the user, and if the unknown image data has a plurality of modalities, the classification results obtained by the multi-modal classifier can be provided to the user. Accordingly, it is possible to provide the user with classification results of the best accuracy according to image data of various modalities and a combination of image data of various modalities.

The embodiments described above are provided to illustrate specific examples for the purpose of facilitating comprehension of the present disclosure, and the present disclosure is not limited to the embodiments described above, and should be understood to encompass various modifications and alternatives to the embodiments. For example, it should be understood that each of the embodiments described above can be realized with its configuration elements modified without departing from its spirit and scope. Moreover, it should be understood that the plurality of configuration elements disclosed in the embodiments described above can be appropriately combined to realize various embodiments. Furthermore, a person skilled in the art would understand that various embodiments may be realized by omitting, from the entirety of the configuration elements described in the embodiments, some of the configuration elements, or by adding, to the configuration elements described in the embodiments, some constituents. That is, the classification apparatus, the classification method, and the program can be modified or changed without departing from the scope of the claims.

In the embodiments described above, image data obtained by different imaging methods is provided as an example of the input data of different modalities, but the input data is not limited to image data. For example, the input data may include other data such as sound data, text data, or the like. Moreover, in the embodiments described above, skin image data is provided as an example of the image data, but the image data is not limited to skin image data, and image data of a different body part may be used in accordance with the diagnosis target.

In the embodiments described above, as illustrated in FIG. 1, an example is described in which the input controller 20 and the output controller 40 are provided separate from the classifier 30, and each controls the input/output to the classifier 30, but a configuration is possible in which the functions of the input controller 20 and the output controller 40 are realized by an inputter and an outputter in the classifier 30.

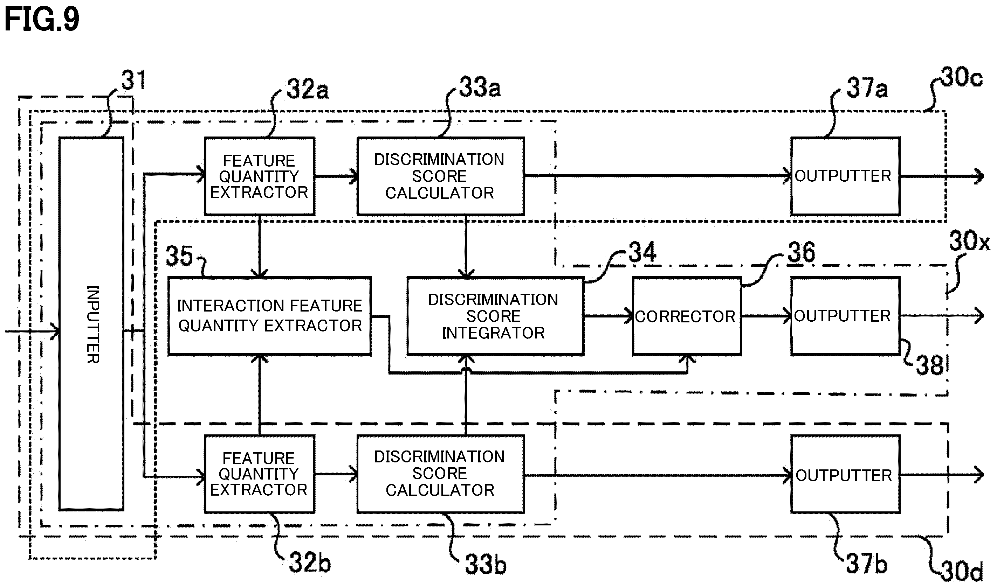

FIG. 9 is a drawing illustrating a modified example of the functional configuration of the classifier illustrated in FIG. 3. For example, as illustrated in FIG. 9, a configuration is possible in which the classifier 30 includes a single inputter 31, and input data acquired by the inputter 31 is assigned, through switching processing performed within that inputter 31, to an appropriate single-modal classifier 30c or single-modal classifier 30d according to the modality of that input data. The classifier illustrated in FIG. 9 differs from the classifier 30 illustrated in FIG. 3 in that the classifier illustrated in FIG. 9 includes a single inputter instead of inputters provided to each single-modal classifier.

Although FIG. 9 illustrates an example in which the inputter 31 is shared, a configuration is possible in which the classifier 30 includes a single outputter instead of outputters respectively provided to each of the single-modal classifiers and the multi-modal classifier. The single outputter may output, by performing switching processing in accordance with the modality of the input data, classification results corresponding to the modality from the classifier 30.

Moreover, although FIG. 9 illustrates an example in which the inputter 31 is shared, a configuration is possible in which not only the input layer corresponding to the inputter 31 is shared, but also the intermediate layers sharing the parameters are shared. That is, a configuration is possible in which the switching processing described above is performed by the feature quantity extractor (the intermediate layers) instead of by the inputter (the input layer). In this case, as with the case in which different intermediate layers share the parameters, one or more intermediate layers of the single-modal classifier use the same parameters as the intermediate layers of other single-modal classifier.

In the embodiments described above, an example is described in which a deep learning model, in particular a CNN model, is used as the machine learning model, but the machine learning model used in the classifier 30 is not limited to a CNN model. A configuration is possible in which other different algorithms such as support vector machines (SVM) or the like are used, or are used in combination with a CNN model. Moreover, other algorithms used in the processing corresponding to the feature quantity extractor are not limited to algorithms of machine learning models such as CNN and SVM, and may be an existing image processing model.

When the processing corresponding to the feature quantity extractor is performed with other algorithms, the processing corresponding to the feature quantity extractor may be performed as preprocessing of the classification processing performed by the classifier 30 using the CNN model and, for example, may be performed by the input controller 20. In one example, the preprocessing includes image reduction processing, brightness adjustment processing, filtering processing, and the like. Moreover, in a case in which the classification apparatus includes an imaging apparatus, the preprocessing may include cropping processing that is performed at the time of imaging.

In the present specification, the expression "according to A" does not mean "according to only A", but means "according to at least A." That is, "according to A" may mean "according to A and B."

Note that, not only it is possible to provide, as the classification apparatus according to the present disclosure, a specialized information processing apparatus provided in advance with the configurations for realizing the various functions according to the present disclosure, but it is also possible to cause an existing information processing apparatus to function as the classification apparatus according to the present disclosure through application of a program. That is, a configuration is possible in which, by applying, to a processor that controls an existing information processing apparatus, a program for realizing the various functions of the classification apparatus according to the present disclosure in a manner that the processor can execute the program, the existing information processing apparatus may be caused to function as the classification apparatus according to the present disclosure.

Note that, such a program can be applied by any method. For example, the program may be stored on a non-transitory computer-readable recording medium such as a flexible disc, a compact disc (CD), read-only member (ROM), a digital versatile disc (DVD) ROM, and a memory card, and be applied. Alternatively, the program may be superimposed on a carrier wave and applied via a communication network such as the internet and a local area network (LAN). Specifically, the program may be posted to a bulletin board system (BBS) on the communication network, and be distributed. Then, a configuration is possible in which the processor that controls the existing information processing apparatus starts the program and executes, as with other application programs, the program under the control of the operating system (OS) to realize the various functions of the classification apparatus according to the present disclosure.

This application claims the priority to Japanese Patent Application No. 2022-151008, filed on September 22, 2022, the entire disclosure of which is incorporated by reference herein.

### Industrial Applicability

The present disclosure can be applied to a classification apparatus, a classification method, and a program that can accurately perform the classification of a target using data of a plurality of different modalities.

### Reference Signs List

10 Processor
20 Input controller
30 Classifier
30a, 30b Single-modal classifier
30b Single-modal classifier
30x Multi-modal classifier
31a, 31b Inputter
32a, 32b Feature quantity extractor
33a, 33b Classification score calculator
34 Classification score integrator
35 Interaction feature quantity extractor
36 Corrector
37a, 37b, 38, 80 Outputter
40 Output controller
50 Storage
60 Operation inputter
70 Data inputter
100 Diagnosis support apparatus
FI Interaction feature quantity
L11, L21 Input layer
L12 to L18, L22 to L28, L31, L32 Intermediate layer
L19, L29, L33 Output layer
Sa, Sb Classification score
Sx Final classification score
TS Integrated classification score

## Claims

1. A classification apparatus comprising:
a multi-modal classifier corresponding to a plurality of mutually different modalities; and
a plurality of single-modal classifiers corresponding to each of the plurality of mutually different modalities, wherein
the multi-modal classifier is configured to classify, based on a plurality of classification scores calculated by the plurality of single-modal classifiers and a plurality of feature quantities that are obtained in a process of calculating the plurality of classification scores and are respectively calculated by the different single-modal classifiers, a target.

2. The classification apparatus according to claim 1, wherein the multi-modal classifier comprises a corrector that corrects, based on the plurality of feature quantities, an integrated classification score calculated by integrating the plurality of classification scores.

3. The classification apparatus according to claim 2, wherein
the multi-modal classifier further comprises an interaction feature quantity extractor that extracts, based on the plurality of feature quantities, an interaction feature quantity, and
the corrector corrects the integrated classification score with the interaction feature quantity.

4. The classification apparatus according to claim 3, wherein
each of the plurality of single-modal classifiers includes
a neural network including two or more intermediate layers, and
in one or more of the two or more intermediate layers, a parameter identical to that of an intermediate layer of another single-modal classifier is used.

5. The classification apparatus according to claim 4, wherein each of the plurality of feature quantities is extracted in an intermediate layer that does not share a parameter with an intermediate layer of another single-modal classifier.

6. The classification apparatus according to claim 5, wherein the interaction feature quantity extractor extracts from the plurality of feature quantities in the intermediate layer that does not share the parameter.

7. The classification apparatus according to any one of claims 3 to 6, wherein
the multi-modal classifier comprises a neural network including
an input layer shared between each of the plurality of single-modal classifiers,
two or more intermediate layers including a shared intermediate layer shared between each of the plurality of single-modal classifiers, and a unique intermediate layer unique to the multi-modal classifier, and
an output layer.

8. The classification apparatus according to claim 7, wherein
the unique intermediate layer comprises
a classification score integrator that calculates the integrated classification score by weighted addition of the plurality of classification scores,
the interaction feature quantity extractor that extracts, based on the plurality of feature quantities output from the shared intermediate layer, the interaction feature quantity, and
the corrector that adds the interaction feature quantity as a bias to the integrated classification score, and
the output layer calculates classification results by inputting, into an activation function, a final classification score obtained by adding the interaction feature quantity to the integrated classification score.

9. The classification apparatus according to any one of claims 1 to 6, further comprising:
an output controller that outputs classification results, wherein
the output controller
when input data is data having a single modality, acquires the classification results from a single-modal classifier corresponding to the single modality, and
when the input data is a plurality of data having the plurality of modalities, acquires the classification results from the multi-modal classifier corresponding to the plurality of modalities.

10. The classification apparatus according to any one of claims 1 to 5, further comprising:
an input controller that inputs input data into a single-modal classifier corresponding to a modality of the input data.

11. The classification apparatus according to claim 10, wherein the input controller inputs, based on information identifying the modality of the input data acquired from meta data attached to the input data, the input data into the single-modal classifier corresponding to the modality of the input data.

12. The classification apparatus according to any one of claims 1 to 5, wherein
the classification apparatus constitutes a diagnosis support apparatus that outputs, in response to an input of skin image data, classification results of a disease to be diagnosed,
skin image data having the plurality of mutually different modalities to which the multi-modal classifier corresponds includes image data imaged by a plurality of mutually different imaging methods using a dermoscope, and
the plurality of imaging methods is distinguished by a combination of elements of use/non-use of gel, use/non-use of a polarization filter, use/non-use of UV light, and contact or non-contact imaging.

13. A classification method comprising:
inputting each of a plurality of input data having mutually different modalities into a corresponding single-modal classifier to acquire a plurality of classification scores;
acquiring a plurality of feature quantities that are obtained in a process of calculating the plurality of classification scores and are respectively calculated by the different single-modal classifiers; and
classifying, based on the plurality of classification scores and the plurality of feature quantities, a target by a multi-modal classifier corresponding to a plurality of modalities corresponding to the plurality of input data.

14. A program that causes a computer to execute processing for:
inputting each of a plurality of input data having mutually different modalities into a corresponding single-modal classifier to acquire a plurality of classification scores;
acquiring a plurality of feature quantities that are obtained in a process of calculating the plurality of classification scores and are respectively calculated by the different single-modal classifiers; and
classifying, based on the plurality of classification scores and the plurality of feature quantities, a target by a multi-modal classifier corresponding to a plurality of modalities corresponding to the plurality of input data.
